# EUROPEAN PATENT APPLICATION

(11) **EP 4 209 468 A1**
(43) Date of publication of application: **12.07.2023**
(21) Application number: 21864163.7
(22) Date of filing: 23.08.2021
(51) Int. Cl.: C03C 10/14, C03C 21/00

(54) **REINFORCED CRYSTALLIZED GLASS**

(30) Priority: 04.09.2020 JP 2020149142
(71) Applicant: Ohara, Inc., Sagamihara-shi, Kanagawa 252-5286 (JP)
(72) Inventor: KIKKAWA, Saya, Sagamihara-Shi Kanagawa 252-5286 (JP); OGASAWARA, Kohei, Sagamihara-Shi Kanagawa 252-5286 (JP); YAGI, Toshitaka, Sagamihara-Shi Kanagawa 252-5286 (JP)
(74) Representative: SSM Sandmair
(86) International application number: PCT/JP2021/030790
(87) International publication number: WO 2022/050105

(57) **Abstract**

Provided is reinforced crystallized glass that has a high strength and is less likely to break.

The reinforced crystallized glass includes a compressive stress layer on a surface, and [CS_{50µm} ^{∗} (DOL_{zero} - 50)]/2 is 2000 or more, where CS_{50µm} (MPa) is a compressive stress at a depth of 50 µm from an outermost surface, and DOL_{zero} (µm) is a stress depth when the compressive stress is 0 MPa.

## Description

### FIELD OF THE DISCLOSURE

The present disclosure relates to reinforced crystallized glass.

### BACKGROUND OF THE DISCLOSURE

A cover glass for protecting a display is used in a portable electronic device such as a smartphone and a tablet PC. A protector for protecting a lens is also used in an in-vehicle optical device. In recent years, there is a demand for a use in a housing or the like serving as an exterior of an electronic device. Thus, there is an increasing demand for a material having higher strength so that these devices can withstand more rigorous use.

Conventionally, chemically strengthened glass is employed as a material for use in a protective member and the like. However, the strength of conventional chemically strengthened glass strongly decreases when a crack occurs in a vertical direction from the glass surface, and thus, there is a problem in that the conventional chemically strengthened glass often breaks when a portable device is dropped.

Patent Document 1 discloses a material composition of a crystallized glass substrate for an information recording medium that can be chemically strengthened. Patent Document 1 states that an α-cristobalite-based crystallized glass described in Patent Document 1 may be chemically strengthened and may be utilized as a material substrate having high strength. However, crystallized glass for an information recording medium, of which a substrate for a hard disk is a representative example, is not intended for use in a harsh environment.

### CITATION LIST

### [Patent Literature]

[Patent Document 1] Japanese Unexamined Patent Application Publication No. 2008-254984

### SUMMARY OF THE DISCLOSURE

### [Technical Problem]

An object of the present disclosure is to provide reinforced crystallized glass that has a high strength and is less likely to break.

The present disclosure provides the following.
(Configuration 1)
   A reinforced crystallized glass including a compressive stress layer on a surface, in which
   [CS_{50µm} ^{∗} (DOL_{zero} - 50)]/2 is 2000 or more, where CS_{50µm} (MPa) is a compressive stress at a depth of 50 µm from an outermost surface, and DOL_{zero} (µm) is a stress depth when the compressive stress is 0 MPa.
(Configuration 2)
   The reinforced crystallized glass according to Configuration 1, in which the stress depth DOL_{zero} is 70 to 300 µm.
(Configuration 3)
   The reinforced crystallized glass according to Configuration 1 or 2, in which the CS_{50µm} is 55 to 400 MPa.
(Configuration 4)
   The reinforced crystallized glass according to any one of Configurations 1 to 3, in which a compressive stress CS (MPa) of the outermost surface of the compressive stress layer is 600 to 1200 MPa.
(Configuration 5)
   The reinforced crystallized glass according to any one of Configurations 1 to 4, including at least one type selected from α-cristobalite and an α-cristobalite solid solution as a main crystal phase, in which
   by mass% in terms of oxide,
   a content of a SiO₂ component is 50.0% to 75.0%,
   a content of a Li₂O component is 3.0% to 10.0%,
   a content of an Al₂O₃ component is 5.0% or more and less than 15.0%, and
   a content of a B₂O₃ component is 0% to 10.0%.
(Configuration 6)
   The reinforced crystallized glass according to any one of Configurations 1 to 5, in which,
   by mass% in terms of oxide,
   a content of a ZrO₂ component is more than 0% and 10.0% or less, and
   a total content of the Al₂O₃ component and the ZrO₂ component is 10.0% or more.

### [Effects of the Invention]

According to the present disclosure, it is possible to provide reinforced crystallized glass that has a high strength and is less likely to break.

The reinforced crystallized glass according to the present disclosure may be used for a protective member and the like of a device by taking advantage of a feature of the reinforced crystallized glass of being a glass material having high strength. The reinforced crystallized glass according to the present disclosure may be utilized as a cover glass or a housing of a smartphone, a member of a portable electronic device such as a tablet PC and a wearable terminal, and a protective protector, a member of a substrate for a head-up display, or the like used in a transport vehicle such as a car and an airplane. The reinforced crystallized glass according to the present disclosure can also be used for other electronic devices and machinery, a building member, a member for a solar panel, a member for a projector, and a cover glass (windshield) for eyeglasses and watches, for example.

### BRIEF DESCRIPTION OF THE DRAWINGS

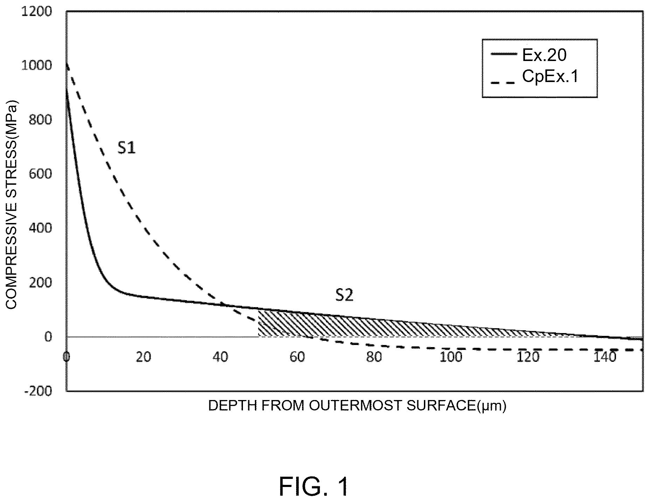

FIG. 1 is a graph illustrating changes in compressive stress with respect to a depth from an outermost surface of a compressive stress layer of reinforced crystallized glass manufactured in Example 20 and Comparative Example 1.

### DETAILED DESCRIPTION OF THE EXEMPLARY EMBODIMENTS

Embodiments and examples of a reinforced crystallized glass according to the present disclosure will be described below in detail, but the present disclosure is not limited to the following embodiments and examples, and may be implemented with appropriate changes within the scope of the object of the present disclosure.

### [Reinforced Crystallized Glass]

The reinforced crystallized glass according to the present disclosure includes a compressive stress layer on a surface. The compressive stress layer may be formed by subjecting the crystallized glass to an ion exchange treatment. The compressive stress layer is formed to have a predetermined thickness from an outermost surface of a substrate to the inside, and a compressive stress is highest on the outermost surface, and decreases toward the inside to reach zero.

FIG. 1 is a graph illustrating a change in compressive stress (MPa) with respect to a depth (µm) from an outermost surface in a compressive stress layer in a surface portion of reinforced crystallized glass manufactured in Example 20 and Comparative Example 1. A portion at a depth of zero refers to the outermost surface. The compressive stress of the outermost surface (also referred to as outermost surface compressive stress) is expressed by CS, and the depth of the compressive stress layer (also referred to as stress depth) when the compressive stress is 0 MPa is expressed by DOL_{zero}. As illustrated in FIG. 1, after the compressive stress decreases abruptly (a first slope S1) inward from the outermost surface, the compressive stress gradually decreases (a second slope S2). As shown in Example 20, in the present disclosure, DOL_{zero} is deep and the first slope S1 is larger than in Comparative Example 1. In FIG. 1, when a compressive stress value from a depth of 50 µm from the outermost surface to DOL_{zero}, that is, an integral value from CS_{50µm} MPa to 0 MPa, is approximated to an area of a triangle, the compressive stress value is represented by [CS_{50µm} ^{∗} (DOL_{zero} - 50)]/2. In the present disclosure, [CS_{50µm} ^{∗} (DOL_{zero} - 50)]/2 is 2000 or more. A lower limit may be 3000 or more, or 4000 or more. An upper limit may be 12,000 or less, 11,000 or less, or 10,000 or less.

The outermost surface compressive stress CS is usually from 600 to 1200 MPa, and may be, for example, from 650 to 1100 MPa or from 700 to 1000 MPa.

The compressive stress CS_{50µm} at a depth of 50µm is usually from 55 to 400 MPa, and may be, for example, from 58 to 300 MPa, or from 60 to 280 MPa.

The compression depth DOL_{zero} determined by linear analysis may be from 70 to 300 µm, and may be, for example, from 80 to 250 µm, from 90 to 230 µm, or from 100 to 200 µm.

If the compressive stress layer satisfies a relationship in which [CS_{50µm} * (DOL_{zero} - 50)]/2 is 2000 or more, it is difficult to break the reinforced crystallized glass. It is possible to adjust the stress depth, a stress gradient, and the outermost surface compressive stress by adjusting a composition and a chemical strengthening condition.

When the reinforced crystallized glass is used as a substrate, a lower limit of the thickness of the substrate is preferably 0.10 mm or more, more preferably 0.30 mm or more, still more preferably 0.40 mm or more, and yet still more preferably 0.50 mm or more, and an upper limit of the thickness of the reinforced crystallized glass is preferably 1.10 mm or less, more preferably 1.00 mm or less, still more preferably 0.90 mm or less, and yet still more preferably 0.80 mm or less.

The reinforced crystallized glass according to the present disclosure preferably contains at least one type selected from α-cristobalite and an α-cristobalite solid solution as a main crystal phase. The mechanical strength increases when the reinforced crystallized glass contains these crystal phases.

The term "main crystal phase" as used herein corresponds to a crystal phase contained in the largest amount in the crystallized glass, as determined from a peak of an X-ray diffraction pattern.

A suitable composition range constituting the reinforced crystallized glass is described below. As used herein, contents of each component are all expressed by mass% in terms of oxide unless otherwise specified. Here, "in terms of oxide" means, if it is assumed that all constituent components included in the reinforced crystallized glass are dissolved and converted into oxides and a total mass of the oxides is 100 mass%, an amount of oxides in each of the components contained in the reinforced crystallized glass is expressed by mass%. As used herein, "A% to B%" represents A% or more and B% or less.

In the reinforced crystallized glass according to the present disclosure, preferably,
by mass% in terms of oxide,
a content of a SiO₂ component is 50.0% to 75.0%,
a content of a Li₂O component is 3.0% to 10.0%,
a content of an Al₂O₃ component is 5.0% or more and less than 15.0%, and
a content of a B₂O₃ component is 0% to 10.0%.

The SiO₂ component is an essential component necessary for constituting one or more types selected from α-cristobalite and an α-cristobalite solid solution. If the content of the SiO₂ component exceeds 75.0%, there may be an excessive increase in viscosity and deterioration of meltability. If the content of the SiO₂ is less than 50.0%, the devitrification resistance may deteriorate.

Preferably, an upper limit of the content of the SiO₂ component is 75.0% or less, 74.0% or less, 73.0% or less, 72.0% or less, or 70.0% or less. Preferably, a lower limit of the content of the SiO₂ component is 50.0% or more, 55.0% or more, 58.0% or more, or 60.0% or more.

The Li₂O component is a component for improving the meltability of raw glass. However, if the amount of the Li₂O component is less than 3.0%, it is not possible to obtain the above-described effect and thus, it is difficult to melt the raw glass. If the content of the Li₂O component exceeds 10.0%, an amount of lithium disilicate crystals being produced increases. The Li₂O component is a component contributing to chemical strengthening.

Preferably, a lower limit of the Li₂O component is 3.0% or more, 3.5% or more, 4.0% or more, 4.5% or more, 5.0% or more, or 5.5% or more. Preferably, an upper limit of the Li₂O component is 10.0% or less, 9.0% or less, 8.5% or less, or 8.0% or less.

The Al₂O₃ component is a component suitable for improving the mechanical strength of reinforced crystallized glass. If the content of the Al₂O₃ component is 15.0% or more, the meltability and the devitrification resistance may deteriorate, and if the content is less than 5.0%, the effect of improving the mechanical strength may be poor.

Preferably, an upper limit of the content of the Al₂O₃ component is less than 15.0%, 14.5% or less, 14.0% or less, 13.5% or less, or 13.0% or less. Preferably, a lower limit of the content of the Al₂O₃ component is 5.0% or more, 5.5% or more, 5.8% or more, 6.0% or more, 6.5% or more, or 8.0% or more.

The B₂O₃ component is a component suitable for lowering the glass transition temperature of the reinforced crystallized glass, but if the amount of the B₂O₃ component exceeds 10.0%, the chemical durability tends to decrease.

Preferably, an upper limit of the content of the B₂O₃ component is 10.0% or less, 8.0% or less, 7.0% or less, 5.0% or less, or 4.0% or less. A lower limit of the content of the B₂O₃ component may be 0%, 0.001% or more, 0.01% or more, 0.05% or more, 0.10% or more, or 0.30% or more.

The ZrO₂ component is an optional component. The content of the ZrO₂ component is preferably more than 0% and 10.0% or less.

The ZrO₂ component is a component that can improve the mechanical strength, but if the amount of the ZrO₂ component exceeds 10.0%, the meltability may deteriorate. Preferably, an upper limit of the content of the ZrO₂ component is 10.0% or less, 9.0% or less, 8.5% or less, or 8.0% or less. Preferably, a lower limit of the content of the ZrO₂ component is more than 0%, 1.0% or more, 1.5% or more, or 2.0% or more.

If the sum of the contents of the Al₂O₃ component and the ZrO₂ component, that is, [Al₂O₃ + ZrO₂], is large, the compressive stress on the surface increases when strengthening is performed. Preferably, a lower limit of [Al₂O₃ + ZrO₂] is 10.0% or more, 11.0% or more, 12.0% or more, or 13.0% or more.

On the other hand, if the content of [Al₂O₃ + ZrO₂] is too large, the meltability may easily deteriorate. Therefore, an upper limit of [Al₂O₃ + ZrO₂] is preferably 22.0% or less, 21.0% or less, 20.0% or less, or 19.0% or less.

A lower limit of the total content of the SiO₂ component, the Li₂O component, the Al₂O₃ component, and the B₂O₃ component may preferably be 75.0% or more, 80.0% or more, 83.0% or more, or 85.0% or more.

A P₂O₅ component is an optional component that can be added to act as a crystal nucleating agent for the glass. However, if the amount of the P₂O₅ component exceeds 10.0%, the devitrification resistance is likely to deteriorate and phase separation may easily occur in the glass. An upper limit of the P₂O₅ component is 10.0% or less, 8.0% or less, 6.0% or less, 5.0% or less, or 4.0% or less. Preferably, a lower limit of the P₂O₅ component may be 0% or more, 0.5% or more, 1.0% or more, or 1.5% or more.

The K₂O component is an optional component contributing to chemical strengthening. Preferably, a lower limit of the K₂O component may be 0% or more, 0.1% or more, 0.3% or more, or 0.5% or more.

If the content of the K₂O component is too large, it may be difficult to precipitate crystals. Thus, an upper limit of the K₂O component may preferably be 5.0% or less, 4.0% or less, 3.5% or less, or 3.0% or less.

The Na₂O component is an optional component contributing to chemical strengthening. If the content of the Na₂O component is too large, it may be difficult to obtain a desired crystal phase. Preferably, an upper limit of the content of the Na₂O component may be 4.0% or less, or 3.5% or less, more preferably 3.0% or less, and still more preferably 2.5% or less.

An MgO component, a CaO component, a SrO component, a BaO component, and a ZnO component are optional components that improve the meltability at low temperatures, and may be contained within a range that does not impair the effects of the present disclosure. Therefore, an upper limit of the MgO component may preferably be 4.0% or less, 3.5% or less, 3.0% or less, or 2.7% or less. Preferably, a lower limit of the MgO component may be more than 0%, 0.3% or more, or 0.4% or more. Preferably, an upper limit of the CaO component may be 4.0% or less, 3.0% or less, 2.5% or less, or 2.0% or less. Preferably, an upper limit of the SrO component may be 4.0% or less, 3.0% or less, 2.5% or less, or 2.0% or less. Preferably, an upper limit of the BaO component may be 5.0% or less, 4.0% or less, 3.0% or less, 2.5% or less, or 2.0% or less. Preferably, an upper limit of the ZnO component may be 10.0% or less, 9.0% or less, 8.5% or less, 8.0% or less, or 7.5% or less. Preferably, a lower limit of the ZnO component may be more than 0%, 0.5% or more, or 1.0% or more.

As long as the effects of the present disclosure are not impaired, the reinforced crystallized glass may or may not contain each of an Nb₂O₅ component, a Ta₂O₅ component, and a TiO₂ component. The Nb₂O₅ component is an optional component that improves the mechanical strength of the crystallized glass, if the content of the Nb₂O₅ component exceeds 0%. Preferably, an upper limit of the Nb₂O₅ component may be 5.0% or less, 4.0% or less, 3.5% or less, or 3.0% or less. The Ta₂O₅ component is an optional component that improves the mechanical strength of the crystallized glass, if the content of the Ta₂O₅ component exceeds 0%. Preferably, an upper limit of the Ta₂O₅ component may be 6.0% or less, 5.5% or less, 5.0% or less, or 4.0% or less. The TiO₂ component is an optional component that improves the chemical durability of the crystallized glass, if the content of the TiO₂ component exceeds 0%. Preferably, an upper limit of the TiO₂ component may be less than 1.0%, 0.8% or less, 0.5% or less, or 0.1% or less.

As long as the effect of the present disclosure is not impaired, the reinforced crystallized glass may or may not contain each of a La₂O₃ component, a Gd₂O₃ component, a Y₂O₃ component, a WO₃ component, a TeO₂ component, and a Bi₂O₃ component. The blending amount of each of the components may be from 0% to 2.0%, 0% to less than 2.0%, or from 0% to 1.0%.

As long as the characteristics of the reinforced crystallized glass according to the present disclosure are not impaired, the reinforced crystallized glass may or may not contain other components not described above. Examples of the other components include metal components (including metal oxides thereof) such as Yb, Lu, V, Cr, Mn, Fe, Co, Ni, Cu, Ag, and Mo.

An Sb₂O₃ component may be contained as a glass clarifying agent. On the other hand, if the content of the Sb₂O₃ component is too large, the transmittance in the short wavelength region of the visible light region may deteriorate. Therefore, an upper limit of the Sb₂O₃ component may preferably be 2.0% or less, more preferably 1.0% or less, and still more preferably 0.6% or less.

In addition to the Sb₂O₃ component, the crystallized glass may or may not contain a SnO₂ component, a CeO₂ component, an As₂O₃ component, and one or more types selected from the group consisting of F, NOx, and SOx as the glass clarifying agent. It is noted that an upper limit of the content of the clarifying agent may be preferably 3.0% or less, more preferably 1.0% or less, and most preferably 0.6% or less.

On the other hand, there is a tendency to refrain from using each component of Pb, Th, Tl, Os, Be, Cl, and Se, which are considered in recent years as harmful chemical substances, and thus, it is preferable that these components are substantially not contained.

### [Manufacturing Method]

The reinforced crystallized glass may be manufactured by the following method, for example.

That is, raw materials are uniformly mixed so that the components satisfy a predetermined content range, and melted and shaped to produce raw glass. Next, the raw glass is crystallized to manufacture crystallized glass.

The raw glass may be treated by heat for precipitation of crystals at a one-stage temperature or a two-stage temperature.

The two-stage heat treatment includes a nucleation step of firstly treating the raw glass by heat at a first temperature and a crystal growth step of treating, after the nucleation step, the glass by heat at a second temperature higher than that in the nucleation step.

The first temperature in the two-stage heat treatment may be preferably 450°C to 750°C, more preferably 500°C to 720°C, and still more preferably 550°C to 680°C. A retention time at the first temperature is preferably 30 minutes to 2000 minutes, and more preferably 180 minutes to 1440 minutes.

The second temperature in the two-stage heat treatment may be preferably 550°C to 850°C, and more preferably 600°C to 800°C. A retention time at the second temperature is preferably 30 minutes to 600 minutes, and more preferably 60 minutes to 400 minutes.

In the one-stage heat treatment, the nucleation step and the crystal growth step are continuously performed at the one-stage temperature. Typically, the temperature is raised to a predetermined heat treatment temperature, is maintained for a certain period of time after reaching the predetermined heat treatment temperature, and is then lowered.

In the one-stage heat treatment, the heat treatment temperature is preferably 600°C to 800°C, and more preferably 630°C to 770°C. A retention time at the heat treatment temperature is preferably 30 minutes to 500 minutes, and more preferably 60 minutes to 400 minutes.

Next, a compressive stress layer is formed on a crystallized glass base material through ion exchange by a chemical strengthening method.

The crystallized glass base material is chemically strengthened by a mixed molten salt (in a mixed bath) of a potassium salt and a sodium salt or by a molten salt of sodium salt alone (in a single bath) (first stage), and is further chemically strengthened by a molten salt of potassium salt alone (in a single bath) (second stage). Specifically, for example, the crystallized glass base material is contacted with or immersed in a molten salt for 10 minutes or more, for example, 20 to 200 minutes. The molten salt is obtained by heating a salt containing potassium or sodium, for example, a mixed salt or a composite salt such as potassium nitrate (KNO₃) and sodium nitrate (NaNO₃), or a single salt of sodium nitrate to 300 to 600°C (preferably 320 to 570°C, more preferably 350 to 500°C). The ratio of sodium nitrate to potassium nitrate is, for example, 1:0 to 1:50, 1:0 to 1:30, or 1:0 to 1:28 expressed as a weight ratio. Subsequently, the crystallized glass base material is contacted with or immersed in a molten salt for 50 minutes to 500 minutes, 70 minutes to 450 minutes, or 80 minutes to 400 minutes, for example. The molten salt is obtained by heating a salt containing potassium, for example, potassium nitrate (KNO₃), to 300 to 550°C (more preferably 330 to 500°C, still more preferably 350 to 450°C). By such chemical strengthening, a deep compressive stress layer is formed on a surface portion.

### EXAMPLES

### Examples 1 to 42 and Comparative Example 1

### 1. Manufacturing of Crystallized Glass and Reinforced Crystallized Glass

Raw materials such as oxides, hydroxides, carbonates, nitrates, fluorides, chlorides, and metaphosphate compounds corresponding to a raw material of each component of the crystallized glass were selected, and the selected raw materials were weighed and mixed uniformly to obtain the compositions described in Tables 1 to 3.

Next, the mixed raw materials were injected into a platinum crucible and melted in an electric furnace at 1300°C to 1600°C for 2 to 24 hours depending on the difficulty of melting the glass composition. Subsequently, the molten glass was homogenized by stirring, and cooled to 1000°C to 1450°C. Then, the molten glass was cast into a mold and cooled slowly to prepare raw glass. The raw glass thus obtained was heated to manufacture crystallized glass.

Crystal phases of the crystallized glass of Examples 1 to 42 and Comparative Example 1 were determined from an angle of a peak appearing in the X-ray diffraction pattern using an X-ray diffraction analyzer (D8 Discover manufactured by Bruker). In the crystallized glass of Examples 1 to 42, all the main peaks (peaks with the highest intensity and the largest peak area) were observed at positions corresponding to the peak pattern of α-cristobalite and/or an α-cristobalite solid solution. Therefore, it was determined that the α-cristobalite and/or the α-cristobalite solid solution were precipitated as the main crystal phase in all glasses. In the crystallized glass of Comparative Example 1, the peaks of α-cristobalite and the α-cristobalite solid solution were not observed. In Comparative Example 1, crystal phases of MgAl₂O₄ and MgTi₂O₄ were confirmed.

Next, the manufactured crystallized glass was cut and ground, and opposing sides of the resultant crystallized glass were further polished in parallel to achieve the material thickness described in Tables 1 to 3 to obtain a crystallized glass substrate. The crystallized glass substrate serving as a base material was subjected to the two-stage strengthening to obtain a chemically strengthened crystallized glass substrate. Specifically, the crystallized glass substrate was immersed in the NaNO₃ molten salt (Na single bath) or the mixed molten salt of KNO₃ and NaNO₃ (K: Na) at the temperatures and for the time periods shown in Tables 1 to 3 (first stage). Afterwards, the resultant crystallized glass substrate was immersed in the KNO₃ molten salt (K single bath) at the temperatures and for the time periods shown in Tables 1 to 3 (second stage). The ratio of K: Na in the mixed molten salt of the first stage is the weight ratio of KNO₃ and NaNO₃.

### 2. Evaluation of Reinforced Crystallized Glass

### (1) Stress Measurement

The compressive stress value (CS) (MPa) of the outermost surface of the compressive stress layer formed on the surface of the reinforced crystallized glass substrate, the depth DOL_{zero} (µm) when the compressive stress of the compressive stress layer is 0 MPa, and the compressive stress value (CS_{50µm}) (MPa) at a depth of 50 µm from the outermost surface were measured, and the results are shown in Tables 1 to 3. Further, [CS_{50µm} ^{∗} (DOL_{zero} - 50)]/2 was determined by calculation and is shown in Tables 1 to 3. FIG. 1 shows profiles of compressive stress with respect to depth of the reinforced crystallized glass manufactured in Example 20 and Comparative Example 1.

The compressive stress value (CS) on the outermost surface was measured by using a glass surface stress meter FSM-6000LE series manufactured by Orihara Manufacturing Co., LTD. A light source having a wavelength of 596 nm was used as the light source of the measuring instrument. A light source having a wavelength of 365 nm can also be selected depending on the strengthening depth.

As the refractive index used in the CS measurement, a refractive index value at 596 nm was used. The refractive index value at 365 nm is used when using a light source of 365 nm. It is noted that the refractive index value at a wavelength of 596 nm or 365 nm can be calculated by using a quadratic approximation expression from the measured values of the refractive index at the wavelengths of a C-line, a d-line, an F-line, and a g-line according to the V-block method specified in JIS B 7071-2: 2018.

As a photoelastic constant used for the CS measurement, the value of a photoelastic constant at 596 nm was used. The photoelastic constant at 365 nm is used when using a light source of 365 nm. It is noted that the photoelastic constants at wavelengths of 596 nm or 365 nm can be calculated by using a quadratic approximation expression from the measured values of the photoelastic constants at a wavelength of 435.8 nm, a wavelength of 546.1 nm, and a wavelength of 643.9 nm. In the Examples, 29.6 was used as a representative value of the photoelastic constant at a wavelength of 596 nm, and in the Comparative Example, 29.358 was used as a representative value of the photoelastic constant at a wavelength of 596 nm.

The photoelastic constant (β) was determined by polishing opposing sides of a sample shape to form a disk having a diameter of 25 mm and a thickness of 8 mm, applying a compressive load to the disk in a predetermined direction, measuring an optical path difference occurring in a center of the glass, and using the relational expression δ = β^{∗}d^{∗}F. In the relational expression, δ (nm) denotes the optical path difference, d (mm) denotes the glass thickness, and F (MPa) denotes the stress.

The compressive stress value (CS_{50µm}) at a depth of 50 µm and the depth DOL_{zero} (µm) when the compressive stress of the compressive stress layer is 0 MPa were measured using a scattered light photoelastic stress meter SLP-1000. A light source having a wavelength of 640 nm was used as a measurement light source.

A refractive index value at a wavelength of 640 nm was calculated by using a quadratic approximation expression from the measured values of the refractive index at the wavelengths of the C-line, the d-line, the F-line, and the g-line according to the V-block method specified in JIS B 7071-2: 2018.

The photoelastic constant at a wavelength of 640 nm used in the measurement of CS_{50µm} and DOL_{zero} can be calculated by using a quadratic approximation expression from the measured values of the photoelastic constants at a wavelength of 435.8 nm, a wavelength of 546.1 nm, and a wavelength of 643.9 nm. 29.2 was used as a representative value of the photoelastic constant in the Examples and 27.6 in the Comparative Example.

### (2) Falling Ball Test

In this test, sandpaper is used to simulate a drop on asphalt.

Sandpaper having a roughness of #80 was placed on a marble base, and a circular crystallized glass substrate (diameter of 36 mm) was placed on the sandpaper. Next, an iron ball made from stainless steel having a weight of 16.0 g was dropped onto the substrate from a height of 40 mm (4 cm) from the substrate. If the substrate did not break after the drop, the height was increased by 20 mm (2 cm) and the test was continued in much the same way until the substrate was broken, to determine a height (mm) at which the substrate was broken. The results are shown in Tables 1 to 3.

**[Table 1]**

| Examples | | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Composition [mass%] | SiO₂ | | 65.66 | 65.66 | 65.66 | 65.66 | 65.66 | 65.66 | 65.66 | 65.66 | 65.66 | 65.66 | 65.66 | 65.66 | 67.42 | 66.68 |
| | Al₂O₃ | | 12.44 | 12.44 | 12.44 | 12.44 | 12.44 | 12.44 | 12.44 | 12.44 | 12.44 | 12.44 | 12.44 | 12.44 | 12.20 | 12.44 |
| | B₂O₃ | | | | | | | | | | | | | | | |
| | P₂O₃ | | 2.04 | 2.04 | 2.04 | 2.04 | 2.04 | 2.04 | 2.04 | 2.04 | 2.04 | 2.04 | 2.04 | 2.04 | 1.50 | 2.04 |
| | Li₂O | | 7.14 | 7.14 | 7.14 | 7.14 | 7.14 | 7.14 | 7.14 | 7.14 | 7.14 | 7.14 | 7.14 | 7.14 | 7.00 | 7.14 |
| | Na.O | | | | | | | | | | | | | | | |
| | K₂O | | 1.53 | 1.53 | 1.53 | 1.53 | 1.53 | 1.53 | 1.53 | 1.53 | 1.53 | 1.53 | 1.53 | 1.53 | 1.00 | 1.53 |
| | M_{g}O | | 1.02 | 1.02 | 1.02 | 1.02 | 1.02 | 1.02 | 1.02 | 1.02 | 1.02 | 1.02 | 1.02 | 1.02 | 0.30 | |
| | CaO | | 0.41 | 0.41 | 0.41 | 0.41 | 0.41 | 0.41 | 0.41 | 0.41 | 0.41 | 0.41 | 0.41 | 0.41 | | 0.41 |
| | ZnO | | 4.08 | 4.08 | 4.08 | 4.08 | 4.08 | 4.08 | 4.08 | 4.08 | 4.08 | 4.08 | 4.08 | 4.08 | 3.50 | 4.08 |
| | ZrO₂ | | 5.60 | 5.60 | 5.60 | 5.60 | 5.60 | 5.60 | 5.60 | 5.60 | 5.60 | 5.60 | 5.60 | 5.60 | 7.00 | 5.60 |
| | TiO₂ | | | | | | | | | | | | | | | |
| | Sb₂O₃ | | 0.08 | 0.08 | 0.08 | 0.08 | 0.08 | 0.08 | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 | 100.00 | 100.00 | 100.00 | 100.00 | 100.00 | 100.00 |
| | Al₂O₃ + ZrO₂ | | 18.04 | 18.04 | 18.04 | 18.04 | 18.04 | 18.04 | 18.04 | 18.04 | 18.04 | 18.04 | 18.04 | 18.04 | 19.20 | 18.04 |
| Chemical Strengthening Conditions | First stage | Salt bath (K: Na) | Na single bath | Na single bath | Na single bath | Na single bath | Na single bath | Na single bath | 5:1 | 10:1 | 20:1 | Na single bath | 10:1 | 20:1 | Na single bath | Na single bath |
| | | Temperat tire [°C] | 420 | 460 | 380 | 380 | 400 | 400 | 400 | 400 | 400 | 380 | 380 | 380 | 400 | 400 |
| | | Time [min] | 30 | 30 | 120 | 30 | 60 | 60 | 60 | 60 | 60 | 60 | 60 | 60 | 60 | 60 |
| | Second stage | Salt bath | K single bath | K single bath | K single bath | K single bath | K single bath | K single bath | K single bath | K single bath | K single bath | K single bath | K single bath | K single bath | K single bath | K single bath |
| | | Temperat ure [°C] | 400 | 400 | 380 | 380 | 370 | 370 | 370 | 370 | 370 | 370 | 370 | 370 | 370 | 370 |
| | | Time [min] | 120 | 120 | 120 | 120 | 200 | 340 | 200 | 200 | 200 | 200 | 200 | 200 | 200 | 200 |
| Material thickeness [mm] | | | 0.83 | 0.79 | 0.79 | 0.80 | 0.60 | 0.60 | 0.60 | 0.60 | 0.60 | 1.01 | 1.01 | 0.73 | 0.69 | 0.73 |
| Stress | CS[MPa] | | 899.0 | 829.0 | 926.5 | 886.5 | 903.2 | 858.6 | 897.9 | 898.1 | 914.3 | 851.9 | 851.4 | 920.3 | 735.4 | 831.8 |
| | DOLzero [µm] | | 122.9 | 138.5 | 118.7 | 110.1 | 129.7 | 131.7 | 132.6 | 129.0 | 117.7 | 163.2 | 160.4 | 125.5 | 133.1 | 144.2 |
| | CS 50µm [MPa] | | 132.6 | 138.3 | 128.8 | 70.7 | 96.0 | 64.6 | 74.5 | 78.8 | 65.3 | 123.2 | 114.8 | 98.1 | 141.0 | 114.2 |
| | CS_50µm ^{∗} (DOLzero - 50)/2 | | 4834 | 6120 | 4422 | 2125 | 3825 | 2637 | 3076 | 3112 | 2211 | 6977 | 6336 | 3699 | 5860 | 5376 |
| Falling ball | test Height [mm] | | 200 | | 180 | | | | | | | 22 0 | 240 | | | |

**[Table 2]**

| | | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|---|
| Composition [mass%] | SiO₂ | | 64.20 | 64.20 | 64.20 | 64.36 | 64.20 | 64.86 | 64.20 | 64.20 | 64.20 | 64.86 | 64.20 | 64.20 | 65.66 | 64.86 |
| | Al₂O₃ | | 12.10 | 12.10 | 12.10 | 12.44 | 12.10 | 12.44 | 12.10 | 11.60 | 12.10 | 12.44 | 12.10 | 12.10 | 12.44 | 12.44 |
| | B₂O₃ | | | | | | | | | | | | | | | |
| | P₂O₅ | | 2.60 | 2.60 | 2.60 | 2.04 | 2.20 | 2.04 | 2.60 | 2.60 | 2.20 | 2.04 | 2.85 | 2.60 | 2.04 | 2.04 |
| | Li₂O | | 6.97 | 7.17 | 6.97 | 7.14 | 7.37 | 7.14 | 6.97 | 6.97 | 7.37 | 7.14 | 6.97 | 6.97 | 7.64 | 6.94 |
| | Na₂O | | | | | | | | | | | 0.50 | | | | |
| | K₂O | | 1.50 | 1.50 | 1.50 | 1.53 | 1.50 | 1.53 | 1.50 | 1.50 | 1.50 | 1.03 | 1.50 | 1.50 | 1.53 | 1.53 |
| | MgO | | 1.10 | 1.60 | 1.10 | 1.02 | 1.10 | 1.02 | 1.70 | 1.70 | 1.60 | 1.02 | 1.10 | 1.65 | 1.02 | 1.22 |
| | CaO | | 0.55 | 0.55 | 1.25 | 0.41 | 1.25 | 0.41 | 0.65 | 0.65 | 0.75 | 0.41 | 1.00 | | 0.41 | 0.41 |
| | ZnO | | 5.30 | 4.60 | 4.60 | 5.38 | 4.60 | 4.88 | 4.60 | 5.10 | 4.60 | 4.88 | 4.60 | 5.30 | 3.58 | 4.88 |
| | ZrO₂ | | 5.60 | 5.60 | 5.60 | 5.60 | 5.60 | 5.60 | 5.60 | 5.60 | 5.60 | 5.60 | 5.60 | 5.60 | 5.60 | 5.60 |
| | TiO₂ | | | | | | | | | | | | | | | |
| | Sb₂O₃ | | 0.08 | 0.08 | 0.08 | 0.08 | 0.08 | 0.08 | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 | 100.00 | 100.00 | 100.00 | 100.00 | 100.00 | 100.00 |
| | Al₂O₃ + ZrO₂ | | 17.70 | 17.70 | 17.70 | 18.04 | 17.70 | 18.04 | 17.70 | 17.20 | 17.70 | 18.04 | 17.70 | 17.70 | 18.04 | 18.04 |
| Chemical Strengthening Conditions | First stage | Salt bath (K: Na) | Na single bath | Na single bath | Na single bath | Na single bath | Na single bath | Na single bath | Na single bath | Na single bath | Na single bath | Na single bath | Na single bath | Na single bath | Na single bath | Na single bath |
| | | Temperat ure [°C] | 400 | 400 | 400 | 400 | 400 | 400 | 400 | 400 | 400 | 400 | 400 | 400 | 400 | 400 |
| | | Time [min] | 60 | 60 | 60 | 60 | 60 | 60 | 60 | 60 | 60 | 60 | 60 | 60 | 60 | 60 |
| | Seco nd stage | Salt bath | K single bath | K single bath | K single bath | K single bath | K single bath | K single bath | K single bath | K single bath | K single bath | K single bath | K single bath | K single bath | K single bath | K single bath |
| | | Temperat ure [°C] | 370 | 370 | 370 | 370 | 370 | 370 | 370 | 370 | 370 | 370 | 370 | 370 | 370 | 370 |
| | | Time [min] | 200 | 200 | 200 | 200 | 200 | 200 | 200 | 200 | 200 | 200 | 200 | 200 | 200 | 200 |
| Material | thickness | [mm] | 0.69 | 0.72 | 0.75 | 0.74 | 0.75 | 0.74 | 0.74 | 0.73 | 0.74 | 0.75 | 0.76 | 0.75 | 0.72 | 0.77 |
| Stress | CS [MPa] | | 917.1 | 926.9 | 805.4 | 780.9 | 801.6 | 910.1 | 882.7 | 898.4 | 994.2 | 979.4 | 928.5 | 954.0 | 831.4 | 945.1 |
| | DOLzero [µm] | | 129.0 | 129.7 | 138.5 | 145.6 | 145.8 | 139.5 | 149.7 | 146.5 | 129.3 | 157.1 | 146.8 | 137.2 | 141.3 | 149.7 |
| | CS 50µm [MPa] | | 118.8 | 132.5 | 171.4 | 187.2 | 164.6 | 140.0 | 157.7 | 152.5 | 221.2 | 185.6 | 184.5 | 182.7 | 148.2 | 128.3 |
| | CS_50µm ^{∗} (DOLzero - 50)/2 | | 4690 | 5283 | 7583 | 8951 | 7889 | 6264 | 7865 | 7359 | 8771 | 9933 | 8926 | 7963 | 6764 | 6394 |
| Falling ball test Height [mm] | | | | | | | | | | | | | | | | |

**[Table 3]**

| Examples | | | 29 | 30 | 31 | 32 | 3, | 34 | 35 | 36 | 37 | 38 | 39 | 40 | 41 | 42 | Comparative Example 1 |
|---|---|---|---|---|---|---|---|---|---|---|---|---|---|---|---|---|---|
| Compositi on [mass%] | SiO₂ | | 64.66 | 64.86 | 64.20 | 64.86 | 64.86 | 64.86 | 64.86 | 64.86 | 64.86 | 64.86 | 64.86 | 64.86 | 65.81 | 64.81 | 54.60 |
| | Al₂O₃ | | 11.94 | 12.44 | 12.10 | 12.44 | 12.44 | 12.64 | 12.44 | 12.44 | 12.44 | 12.74 | 12.44 | 10.74 | 10.72 | 12.72 | 18.00 |
| | B₂O₃ | | | 1.00 | 0.50 | 1.00 | 1.00 | 1.00 | 2.00 | 3.00 | 2.00 | 2.00 | 2.00 | 2.00 | 2.00 | 2.00 | |
| | P₂O₅ | | 2.04 | 2.04 | 2.00 | 2.04 | 2.04 | 2.04 | 2.04 | 2.04 | 2.04 | 2.04 | 2.04 | 2.04 | 2.14 | 2.14 | |
| | Li₂O | | 7.14 | 7.14 | 6.97 | 7.14 | 7.14 | 7.14 | 7.14 | 7.14 | 7.14 | 7.14 | 7.64 | 7.14 | 7.13 | 7.13 | |
| | Na₂O | | | | | | | | | | | | | | 0.50 | 0.50 | 11.60 |
| | K₂O | | 1.53 | 1.53 | 1.50 | 1.53 | 1.53 | 1.33 | 1.53 | 1.53 | 1.53 | 1.23 | 1.03 | 1.23 | 0.73 | 0.73 | 2.40 |
| | MgO | | 2.52 | 1.02 | 1.70 | 2.02 | 1.02 | 1.02 | 1.02 | 1.02 | 0.52 | 1.02 | 1.02 | 1.02 | 1.02 | 1.02 | 7.85 |
| | CaO | | 0.41 | 0.41 | 0.65 | 0.41 | 0.41 | 0.41 | 0.41 | 0.41 | 0.41 | 0.41 | 0.41 | 0.41 | | 0.41 | 0.85 |
| | ZnO | | 4.08 | 3.88 | 4.10 | 2.88 | 3.88 | 3.88 | 2.88 | 1.88 | 3.38 | 2.88 | 2.88 | 1.88 | 2.88 | 2.88 | |
| | ZrO₂ | | 5.60 | 5.60 | 5.60 | 5.60 | 5.60 | 5.60 | 5.60 | 5.60 | 5.60 | 5.60 | 5.60 | 8.68 | 5.60 | 5.60 | |
| | Ta₂O₅ | | | | | | | | | | | | | | 1.41 | | |
| | TiO₂ | | | | | | | | | | | | | | | | 4.70 |
| | Sb₂O₃ | | 0.08 | 0.08 | 0.08 | 0.08 | 0.08 | 0.08 | 0.08 | 0.08 | 0.08 | 0.08 | 0.08 | | 0.06 | 0.06 | 0.08 |
| | Total | | 100.00 | 100.00 | 100.00 | 100.00 | 100.00 | 100.00 | 100.00 | 100.00 | 100.00 | 100.00 | 100.00 | 100.00 | 100.00 | 100.00 | 100.08 |
| | Al₂O₃ + ZrO₂ | | 17.54 | 18.04 | 17.70 | 18.04 | 18.04 | 18.24 | 18.04 | 18.04 | 18.04 | 18.34 | 18.04 | 19.42 | 16.32 | 18.32 | 18.00 |
| Chemical Strengthen ing. Conditions | First stage | Salt bath (K: Na) | Na single bath | Na single bath | Na single bath | Na single bath | Na single bath | Na single bath | Na single bath | Na single bath | Na single bath | Na single bath | Na single bath | 20:1 | 20:1 | 20:1 | 30:1 |
| | | Temperat ure [°C] | 400 | 400 | 400 | 400 | 400 | 400 | 400 | 400 | 400 | 400 | 400 | 450 | 450 | 450 | 460 |
| | | Time [min] | 60 | 60 | 60 | 60 | 60 | 60 | 60 | 60 | 60 | 60 | 60 | 120 | 120 | 120 | 500 |
| | Seco nd stage | Salt bath | K single bath | K single bath | K single bath | K single bath | K single bath | K single bath | K single bath | K single bath | K single bath | K single bath | K single bath | K single bath | K single bath | K single bath | K single bath |
| | | Temperat ure [°C] | 370 | 370 | 370 | 370 | 370 | 370 | 370 | 370 | 370 | 370 | 370 | 400 | 400 | 400 | 450 |
| | | Time [min] | 200 | 200 | 200 | 200 | 200 | 200 | 200 | 200 | 200 | 200 | 200 | 300 | 300 | 300 | 15 |
| Material thickness [mm] | | | 0.78 | 0.76 | 0.77 | 0.77 | 0.77 | 0.77 | 0.77 | 0.77 | 0.74 | 0.74 | 0.73 | 0.61 | 0.73 | 1.00 | 1.01 |
| Stress | CS [MPa] | | 944.5 | 875.7 | 938.9 | 918.0 | 925.9 | 937.0 | 923.4 | 888.7 | 901.6 | 913.7 | 933.2 | 982.8 | 842.3 | 997.1 | 1006.6 |
| | DOLzero [µm] | | 136.4 | 133.5 | 129.0 | 123.5 | 125.1 | 126.9 | 119.3 | 115.9 | 118.9 | 128.6 | 123.2 | 142.6 | 134.6 | 151.3 | 63.0 |
| | CS 50µm [MPa] | | 133.1 | 135.1 | 109.0 | 122.9 | 89.6 | 98.0 | 105.0 | 98.4 | 101.7 | 107.5 | 109.0 | 114.1 | 78.3 | 129.6 | 55.0 |
| | CS_50µm ^{∗} (DOLzero - 50)/2 | | 5751 | 5642 | 4306 | 4518 | 3366 | 3770 | 3635 | 3243 | 3503 | 4226 | 3989 | 5285 | 3312 | 6563 | 359 |
| Falling ball test Height [mm] | | | | | | | | | | | | | | | | 160 | 140 |

## Claims

1. A reinforced crystallized glass comprising a compressive stress layer on a surface, wherein
[CS_{50µm} ^{∗} (DOL_{zero} - 50)]/2 is 2000 or more, where CS_{50µm} (MPa) is a compressive stress at a depth of 50 µm from an outermost surface, and DOL_{zero} (µm) is a stress depth when the compressive stress is 0 MPa.

2. The reinforced crystallized glass according to claim 1, wherein the stress depth DOL_{zero} is 70 to 300 µm.

3. The reinforced crystallized glass according to claim 1 or 2, wherein the CS_{50 µm} is 55 to 400 MPa.

4. The reinforced crystallized glass according to any one of claims 1 to 3, wherein a compressive stress CS (MPa) of the outermost surface of the compressive stress layer is 600 to 1200 MPa.

5. The reinforced crystallized glass according to any one of claims 1 to 4, comprising at least one type selected from α-cristobalite and an α-cristobalite solid solution as a main crystal phase, wherein
by mass% in terms of oxide,
a content of a SiO₂ component is 50.0% to 75.0%,
a content of a Li₂O component is 3.0% to 10.0%,
a content of an Al₂O₃ component is 5.0% or more and less than 15.0%, and
a content of a B₂O₃ component is 0% to 10.0%.

6. The reinforced crystallized glass according to any one of claims 1 to 5, wherein
by mass% in terms of oxide,
a content of a ZrO₂ component is more than 0% and 10.0% or less, and
a total content of the Al₂O₃ component and the ZrO₂ component is 10.0% or more.
